# EUROPEAN PATENT APPLICATION

(11) **EP 4 628 539 A1**
(43) Date of publication of application: **08.10.2025**
(21) Application number: 23898388.6
(22) Date of filing: 01.12.2023
(51) Int. Cl.: C08L 67/04, C08L 67/02, C08L 3/02, C08K 5/092, C08J 5/18, B29C 48/08

(54) **COMPOSITION FOR BIODEGRADABLE FILM, BIODEGRADABLE FILM COMPRISING SAME, AND METHOD FOR MANUFACTURING BIODEGRADABLE FILM**

(30) Priority: 02.12.2022 KR 20220166245
(71) Applicant: CJ CheilJedang Corporation, Seoul 04560 (KR)
(72) Inventor: YEO, Jun Seok, Seoul 04560 (KR); OH, Jee-Yeon, Seoul 04560 (KR); MIN, Sung-Hun, Seoul 04560 (KR); JUNG, Minho, Seoul 04560 (KR); YOON, Ki Chull, Seoul 04560 (KR)
(74) Representative: Meissner Bolte Partnerschaft mbB
(86) International application number: PCT/KR2023/019694
(87) International publication number: WO 2024/117865

(57) **Abstract**

A composition for a biodegradable film according to an embodiment comprises a polyhydroxyalkanoate (PHA) resin and a plasticizer with a melting temperature in a specific range, whereby the composition satisfies a torque of 70% or less, which is applied on a screw, at a pressure of 46 bar or lower inside an extruder during extrusion molding, and thus can achieve improvements in both processability and productivity and provide eco-friendly biodegradable films and products with excellent biodegradability and mechanical properties.

## Description

### Technical Field

Embodiments relate to a composition for a biodegradable film, to a biodegradable film comprising the same, and to a process for preparing a biodegradable film.

### Background Art

General-purpose plastics currently commercialized have excellent physical properties, and demand is increasing due to stable supply and price. However, the problem of disposing of waste plastic is emerging throughout life. Since they do not decompose in natural conditions such as the ocean and soil, they are becoming a factor causing serious problems of environmental pollution. In order to solve these environmental pollution problems, studies on biodegradable plastics have been actively conducted in recent years.

Biodegradable plastic refers to a substance that is decomposed into low-molecular-weight substances by microorganisms existing in nature and ultimately decomposed into water and carbon dioxide, or water and methane gas. Examples of such biodegradable plastics may include biodegradable resins such as polylactic acid (PLA), polybutyleneadipate terephthalate (PBAT), and polybutylene succinate (PBS).

The above biodegradable resins are used particularly for disposable packaging materials for food, disposable bags, mulching films, and the like. When these biodegradable resins are applied to biodegradable films or biodegradable products, various additives are used to secure functionality.

In general, most of the additives conventionally in use are petroleum-based products. In most cases, they do not meet the purpose of developing environmentally friendly substances. Thus, in order to pursue environmentally friendly products, various attempts are being made to develop biodegradable films and products using additives derived from nature.

However, there are limitations in providing high-quality biodegradable films and products that simultaneously satisfy environmentally friendly characteristics and mechanical properties such as strength and elongation by using additives derived from nature. From the process perspective, when molding equipment is used, the load applied is large, and there are limits to securing satisfactory processability and productivity in various processes such as extrusion molding.

### [Prior Art Document]

### [Patent Document]

(Patent Document 1) Korean Laid-open Patent Publication No. 2012-0103158

### Detailed Description of the Invention

### Technical Problem

The present disclosure is devised to solve the problems of the prior art discussed above.

According to an embodiment, the present disclosure aims to provide a composition for a biodegradable film, which has excellent mechanical properties such as tensile strength and elongation, as well as improved processability and productivity during molding, and is biodegradable in both soil and the ocean and is thus environmentally friendly.

According to an embodiment, the present disclosure aims to provide a biodegradable film formed from the composition for a biodegradable film and a process for preparing the same.

### Solution to the Problem

In an embodiment in order to accomplish the above object, there is provided a composition for a biodegradable film, which comprises a polyhydroxyalkanoate (PHA) resin and a plasticizer with a melting temperature of 95°C to 250°C, wherein when the composition for a biodegradable film is fed to an extruder equipped with a screw at 6 rpm and extruded at 170°C at a screw rotation speed of 200 rpm, the load (torque) applied to the screw is 70% or less at a pressure of 46 bar or less inside the extruder.

In the composition for a biodegradable film in another embodiment, the content of the plasticizer is 0.01 phr to 10 phr.

In the composition for a biodegradable film in another embodiment, the plasticizer is adipic acid.

In the composition for a biodegradable film in another embodiment, the polyhydroxyalkanoate (PHA) resin satisfies at least one of the following characteristics: a glass transition temperature (Tg) of -45°C to 80°C, a crystallization temperature (Tc) of 60°C to 120°C, and a melting temperature (Tm) of 100°C to 170°C.

In the composition for a biodegradable film in another embodiment, the polyhydroxyalkanoate (PHA) resin comprises at least one monomer selected from the group consisting of 4-hydroxybutyrate (4-HB), 3-hydroxybutyrate (3-HB), 3-hydroxypropionate (3-HP), 3-hydroxyvalerate (3-HV), 3-hydroxyhexanoate (3-HH), 4-hydroxyvalerate (4-HV), 5-hydroxyvalerate (5-HV), and 6-hydroxyhexanoate (6-HH).

In the composition for a biodegradable film in another embodiment, the polyhydroxyalkanoate (PHA) resin comprises a polyhydroxyalkanoate (PHA) copolymer (PHA copolymer) comprising a 4-hydroxybutyrate (4-HB) monomer, wherein the 4-hydroxybutyrate (4-HB) monomer is employed in an amount of 1% by mole to 99% by mole based on the total moles of monomers contained in the polyhydroxyalkanoate (PHA) copolymer.

In the composition for a biodegradable film in another embodiment, the polyhydroxyalkanoate (PHA) resin comprises a resin comprising a 3-hydroxybutyrate (3-HB) monomer and a 4-hydroxybutyrate (4-HB) monomer, wherein the 4-hydroxybutyrate (4-HB) monomer is employed in an amount of 1% by mole to 60% by mole based on the total moles of the 3-hydroxybutyrate (3-HB) monomer and the 4-hydroxybutyrate (4-HB) monomer.

In the composition for a biodegradable film in another embodiment, it further comprises at least one biodegradable resin selected from the group consisting of polybutylene adipate terephthalate (PBAT), polylactic acid (PLA), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and thermoplastic starch (TPS).

In the composition for a biodegradable film in another embodiment, it further comprises a polylactic acid (PLA) resin, wherein the weight ratio of the polyhydroxyalkanoate (PHA) resin and the polylactic acid (PLA) resin is 10:90 to 50:50.

In the composition for a biodegradable film in another embodiment, it further comprises at least one additive selected from the group consisting of chain extenders, antioxidants, compatibilizers, weight agents, nucleating agents, melt strength enhancers, and slip agents, wherein the content of the additive is 0.1 phr to 50 phr.

In another embodiment, there is provided a biodegradable film, which comprises the composition for a biodegradable film.

In the biodegradable film in another embodiment, it has a tensile strength of 10 MPa to 50 MPa and an elongation of 200% or more.

In another embodiment, there is provided a process for preparing a biodegradable film, which comprises: a first step of preparing a composition for a biodegradable film; and a second step of feeding the composition for a biodegradable film to an extruder to conduct extrusion molding thereof.

In the process for preparing a biodegradable film in another embodiment, the first step comprises mixing a polyhydroxyalkanoate (PHA) resin and a plasticizer with a melting temperature of 95°C to 250°C.

### Advantageous Effects of the Invention

The composition for a biodegradable film according to an embodiment comprises a polyhydroxyalkanoate (PHA) resin and a plasticizer with a melting temperature in a specific range, wherein when it is extruded in an extruder, the load (torque) applied to the screw is 70% or less at a pressure of 46 bar or less inside the extruder. As a result, it is possible to simultaneously enhance processability and productivity and provide environmentally friendly biodegradable films and biodegradable products that have excellent biodegradability and mechanical properties.

### Brief Description of the Drawing

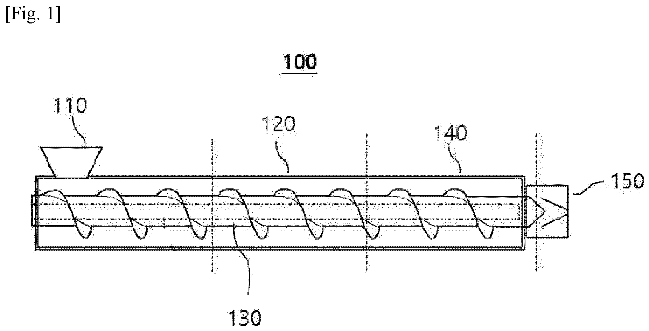

Fig. 1 is a partial cross-sectional view of an extruder used according to an embodiment.

### [Explanation of Reference Numerals]

100: extruder
110: raw material feeder
120: compression section
130: screw
140: head section (header)
150: die

### Best Mode for Carrying out the Invention

Hereinafter, the present disclosure will be described in detail with reference to embodiments. The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

### [Composition for a biodegradable film]

According to an embodiment, there is provided a composition for a biodegradable film, which comprises a polyhydroxyalkanoate (PHA) resin and a plasticizer with a melting temperature of 95°C to 250°C, wherein when the composition for a biodegradable film is fed to an extruder equipped with a screw at 6 rpm and extruded at 170°C at a screw rotation speed of 200 rpm, the load (torque) applied to the screw is 70% or less at a pressure of 46 bar or less inside the extruder.

According to an embodiment, the composition for a biodegradable film has technical significance in that it comprises a polyhydroxyalkanoate (PHA) resin and a plasticizer with a melting temperature in a specific range, whereby it is possible to provide environmentally friendly biodegradable films and biodegradable products having excellent biodegradability and mechanical properties; and that the flowability of the entire resins contained in the composition for a biodegradable film is improved at the molding temperature, and the melt index of the composition for a biodegradable film is enhanced, whereby the load (torque) applied to the screw is satisfied to be 70% or less at a pressure of 46 bar or less inside the extruder during extrusion molding; as a result, the load applied during extrusion molding (e.g., when extrusion equipment (extruder) is used) can be significantly reduced, processability and productivity can be enhanced at the same time, and the quality of a final product can be further enhanced.

Hereinafter, each component of the composition for a biodegradable film will be described in detail.

### Polyhydroxyalkanoate (PHA) resin

The composition for a biodegradable film according to an embodiment of the present disclosure comprises a polyhydroxyalkanoate (PHA).

As the composition for a biodegradable film comprises the polyhydroxyalkanoate (PHA) resin, biodegradability and mechanical properties such as tensile strength and elongation can be enhanced, processability and productivity can be enhanced simultaneously when the composition for a biodegradable film is molded, and the quality of a biodegradable film and a biodegradable product prepared therefrom can be further enhanced.

The polyhydroxyalkanoate (PHA) has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibits complete biodegradability, and is excellent in biocompatibility.

Specifically, the polyhydroxyalkanoate (PHA) is a natural thermoplastic polyester polymer that accumulates in microbial cells. Since it is a biodegradable material, it can be composted and finally decomposed into carbon dioxide, water, and organic waste without generating toxic waste. In particular, since the polyhydroxyalkanoate (PHA) is biodegradable in soil and the ocean, it has environmentally friendly characteristics.

The polyhydroxyalkanoate (PHA) may be a polyhydroxyalkanoate (PHA) homopolymer composed of one monomer or a polyhydroxyalkanoate (PHA) copolymer comprising two or more different monomers. Alternatively, the polyhydroxyalkanoate (PHA) may comprise the polyhydroxyalkanoate (PHA) homopolymer and the polyhydroxyalkanoate (PHA) copolymer.

When the polyhydroxyalkanoate (PHA) is a copolymer, it may be, for example, a copolymerized polyhydroxyalkanoate (PHA) comprising two or more different repeat units in which different monomers are randomly distributed in the polymer chains.

Examples of monomers that may be contained in the polyhydroxyalkanoate (PHA) include 2-hydroxybutyrate, lactic acid, glycolic acid, 3-hydroxybutyrate (hereinafter, referred to as 3-HB), 3-hydroxypropionate (hereinafter, referred to as 3-HP), 3-hydroxyvalerate (hereinafter, referred to as 3-HV), 3-hydroxyhexanoate (hereinafter, referred to as 3-HH), 3-hydroxyheptanoate (hereinafter, referred to as 3-HHep), 3-hydroxyoctanoate (hereinafter, referred to as 3-HO), 3-hydroxynonanoate (hereinafter, referred to as 3-HN), 3-hydroxydecanoate (hereinafter, referred to as 3-HD), 3-hydroxydodecanoate (hereinafter, referred to as 3-HDd), 4-hydroxybutyrate (hereinafter, referred to as 4-HB), 4-hydroxyvalerate (hereinafter, referred to as 4-HV), 5-hydroxyvalerate (hereinafter, referred to as 5-HV), and 6-hydroxyhexanoate (hereinafter, referred to as 6-HH). The polyhydroxyalkanoate (PHA) may comprise at least one monomer selected from the above.

The polyhydroxyalkanoate (PHA) resin may comprise at least one monomer selected from the group consisting of 4-HB, 3-HB, 3-HP, 3-HV, 3-HH, 4-HV, 5-HV, and 6-HH.

For example, the polyhydroxyalkanoate (PHA) may comprise a polyhydroxyalkanoate (PHA) homopolymer composed of a monomer selected from the group consisting of 4-HB, 3-HB, 3-HP, 3-HV, 3-HH, 4-HV, 5-HV, and 6-HH; or a polyhydroxyalkanoate (PHA) copolymer comprising at least one monomer selected from the group consisting of 4-HB, 3-HB, 3-HP, 3-HV, 3-HH, 4-HV, 5-HV, and 6-HH.

Specifically, the polyhydroxyalkanoate (PHA) may be a polyhydroxyalkanoate (PHA) homopolymer composed of a monomer selected from the group consisting of 4-HB and 3-HB; or a polyhydroxyalkanoate (PHA) copolymer comprising at least one monomer selected from the group consisting of 4-HB and 3-HB.

More specifically, the polyhydroxyalkanoate (PHA) may comprise a 4-HB monomer.

The polyhydroxyalkanoate (PHA) may be a polyhydroxyalkanoate (PHA) homopolymer composed of a 4-HB monomer.

In addition, the polyhydroxyalkanoate (PHA) may comprise a polyhydroxyalkanoate (PHA) copolymer comprising a 4-HB monomer.

For example, the polyhydroxyalkanoate (PHA) may be a polyhydroxyalkanoate (PHA) copolymer that comprises a 4-HB monomer and further comprises one monomer different from the 4-HB monomer, or further comprises two, three, four, five, six, or more monomers different from each other.

According to an embodiment, the polyhydroxyalkanoate (PHA) may comprise a 4-HB monomer; and at least one monomer selected from the group consisting of 3-HB, 3-HP, 3-HV, 3-HH, 4-HV, 5-HV, and 6-HH. More specifically, the polyhydroxyalkanoate (PHA) may comprise a polyhydroxyalkanoate (PHA) copolymer comprising a 3-HB monomer and a 4-HB monomer.

For example, the polyhydroxyalkanoate (PHA) may be poly-3-hydroxybutyrate-co-4-hydroxybutyrate (hereinafter, referred to as 3HB-co-4HB).

In addition, the polyhydroxyalkanoate (PHA) may comprise isomers. For example, the polyhydroxyalkanoate (PHA) may comprise structural isomers, enantiomers, or geometric isomers. Specifically, the polyhydroxyalkanoate (PHA) may comprise structural isomers.

According to an embodiment, in order to be suitably used for a biodegradable film and product and to achieve the intended excellent mechanical properties, as well as processability and productivity, in the molding process, in particular, the polyhydroxyalkanoate (PHA) comprising a 4-HB monomer may be used. In such a case, it may be important to control the content ratio of the 4-HB monomer.

For example, the polyhydroxyalkanoate (PHA) may comprise a polyhydroxyalkanoate copolymer (PHA copolymer) comprising a 4-HB monomer, wherein the polyhydroxyalkanoate (PHA) may comprise the 4-hydroxybutyrate (4-HB) monomer in an amount of 1% by mole to 99% by mole based on the total moles of monomers contained in the polyhydroxyalkanoate (PHA) copolymer.

Specifically, the polyhydroxyalkanoate (PHA) may comprise a polyhydroxyalkanoate (PHA) copolymer comprising the 3-HB monomer and the 4-HB monomer, wherein the polyhydroxyalkanoate (PHA) copolymer may comprise the 4-hydroxybutyrate (4-HB) monomer in an amount of 1% by mole to 99% by mole based on the total moles of the 3-hydroxybutyrate (3-HB) monomer and the 4-hydroxybutyrate (4-HB) monomer.

For example, the polyhydroxyalkanoate (PHA) copolymer may comprise the 4-hydroxybutyrate (4-HB) monomer in an amount of 1% by mole or more, 2% by mole or more, 3% by mole or more, 5% by mole or more, or 10% by mole or more, and 99% by mole or less, 95% by mole or less, 90% by mole or less, 85% by mole or less, 80% by mole or less, 75% by mole or less, 70% by mole or less, 65% by mole or less, or 60% by mole or less, based on the total moles of the 3-hydroxybutyrate (3-HB) monomer and the 4-hydroxybutyrate (4-HB) monomer.

Specifically, the polyhydroxyalkanoate (PHA) copolymer may comprise the 4-hydroxybutyrate (4-HB) monomer in an amount of 1% by mole to 99% by mole, 1% by mole to 95% by mole, 1% by mole to 90% by mole, 1% by mole to 89% by mole, 1% by mole to 85% by mole, 1% by mole to 80% by mole, 1% by mole to 79% by mole, 1% by mole to 75% by mole, 1% by mole to 70% by mole, 1% by mole to 65% by mole, 1% by mole to 60% by mole, 1% by mole to 55% by mole, 1% by mole to 50% by mole, 2% by mole to 55% by mole, 3% by mole to 55% by mole, 3% by mole to 50% by mole, 5% by mole to 55% by mole, 5% by mole to 50% by mole, 10% by mole to 55% by mole, 10% by mole to 50% by mole, 15% by mole to 60% by mole, 15% by mole to 55% by mole, 15% by mole to 50% by mole, 20% by mole to 60% by mole, 20% by mole to 55% by mole, 20% by mole to 50% by mole, 25% by mole to 60% by mole, 25% by mole to 55% by mole, 25% by mole to 50% by mole, 25% by mole to 45% by mole, 25% by mole to 40% by mole, 30% by mole to 60% by mole, 30% by mole to 55% by mole, 30% by mole to 50% by mole, 30% by mole to 45% by mole, 30% by mole to 40% by mole, 35% by mole to 60% by mole, 35% by mole to 55% by mole, 35% by mole to 50% by mole, 40% by mole to 60% by mole, 40% by mole to 55% by mole, or 45% by mole to 55% by mole, based on the total moles of the 3-hydroxybutyrate (3-HB) monomer and the 4-hydroxybutyrate (4-HB) monomer.

For example, the polyhydroxyalkanoate (PHA) resin may comprise a resin comprising a 3-hydroxybutyrate (3-HB) monomer and a 4-hydroxybutyrate (4-HB) monomer, wherein it may comprise the 4-hydroxybutyrate (4-HB) monomer in an amount of 1% by mole to 60% by mole based on the total moles of the 3-hydroxybutyrate (3-HB) monomer and the 4-hydroxybutyrate (4-HB) monomer.

When the content of the 4-HB monomer satisfies the above range, it may be more advantageous for achieving the effects desired according to an embodiment; in particular, it is possible to enhance processability and productivity during molding, along with excellent mechanical properties, at the same time.

In addition, the polyhydroxyalkanoate (PHA) comprises at least one 4-HB monomer, and the crystallinity of the polyhydroxyalkanoate (PHA) can be controlled by adjusting the content of the 4-HB monomer. That is, the polyhydroxyalkanoate (PHA) may be a polyhydroxyalkanoate (PHA) copolymer whose crystallinity has been adjusted.

The polyhydroxyalkanoate (PHA) whose crystallinity has been adjusted may be one in which its crystallinity and amorphousness are adjusted as the irregularities are increased in its molecular structure. Specifically, the types and ratios of the monomers or the types and/or contents of the isomers may be adjusted.

Meanwhile, the polyhydroxyalkanoate (PHA) may have a glass transition temperature (Tg) of, for example, -45°C to 80°C, -35°C to 80°C, -30°C to 80°C, -25°C to 75°C, -20°C to 70°C, -35°C to 5°C, -25°C to 5°C, -35°C to 0°C, -25°C to 0°C, -30°C to -10°C, -35°C to -15°C, -35°C to -20°C, -30°C to-20°C, -20°C to 0°C, -15°C to 0°C, or -15°C to -5°C.

The crystallization temperature (Tc) of the polyhydroxyalkanoate (PHA), for example, may not be measured or may be, for example, 60°C to 120°C, 70°C to 120°C, 75°C to 120°C, 75°C to 115°C, 75°C to 110°C, or 90°C to 110°C.

The melting temperature (Tm) of the polyhydroxyalkanoate (PHA), for example, may not be measured or may be, for example, 100°C to 170°C, 110°C to 150°C, or 120°C to 140°C.

In addition, the polyhydroxyalkanoate (PHA) may have a weight average molecular weight of, for example, 10,000 g/mole to 1,200,000 g/mole. For example, the weight average molecular weight of the polyhydroxyalkanoate (PHA) may be 50,000 g/mole to 1,200,000 g/mole, 100,000 g/mole to 1,200,000 g/mole, 50,000 g/mole to 1,000,000 g/mole, 100,000 g/mole to 1,000,000 g/mole, 200,000 g/mole to 1,200,000 g/mole, 250,000 g/mole to 1,150,000 g/mole, 300,000 g/mole to 1,100,000 g/mole, 350,000 g/mole to 1,000,000 g/mole, 350,000 g/mole to 950,000 g/mole, 100,000 g/mole to 900,000 g/mole, 200,000 g/mole to 800,000 g/mole, 200,000 g/mole to 700,000 g/mole, 250,000 g/mole to 650,000 g/mole, 200,000 g/mole to 400,000 g/mole, 300,000 g/mole to 800,000 g/mole, 300,000 g/mole to 600,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole, or 600,000 g/mole to 900,000 g/mole.

The polyhydroxyalkanoate (PHA) may have a melt index (MI) of 0.1 g/10 minutes or more, 0.2 g/10 minutes or more, 0.5 g/10 minutes or more, 1 g/10 minutes or more, 1.5 g/10 minutes or more, or 2 g/10 minutes or more, and 5 g/10 minutes or less, 4.5 g/10 minutes or less, or 4 g/10 minutes or less, when measured at a temperature of 165°C under a load of 2.16 kg according to ASTM D1238.

For example, the melt index (MI) of the polyhydroxyalkanoate (PHA) measured at a temperature of 165°C under a load of 2.16 kg according to ASTM D1238 may be 0.1 g/10 minutes to 5 g/10 minutes, 0.1 g/10 minutes to 4 g/10 minutes, 0.1 g/10 minutes to 3 g/10 minutes, 0.1 g/10 minutes to 2 g/10 minutes, 0.5 g/10 minutes to 5 g/10 minutes, 0.5 g/10 minutes to 4 g/10 minutes, 0.5 g/10 minutes to 3 g/10 minutes, 0.5 g/10 minutes to 2 g/10 minutes, 1 g/10 minutes to 5 g/10 minutes, 1 g/10 minutes to 4 g/10 minutes, or 1 g/10 minutes to 3 g/10.

Meanwhile, the polyhydroxyalkanoate (PHA) may comprise a combination of two or more types of polyhydroxyalkanoates (PHAs) having different crystallinities. That is, the polyhydroxyalkanoate (PHA) can be adjusted to have the content of a 4-HB monomer within the above specific range by mixing two or more types of polyhydroxyalkanoates (PHAs) having different crystallinities.

Specifically, the polyhydroxyalkanoate (PHA) may comprise a first polyhydroxyalkanoate (PHA) resin, a second polyhydroxyalkanoate (PHA) resin, or a mixed resin of the first polyhydroxyalkanoate (PHA) resin and the second polyhydroxyalkanoate (PHA) resin.

The first polyhydroxyalkanoate (PHA) resin and the second polyhydroxyalkanoate (PHA) resin may be distinguished from each other in terms of the content of a 4-HB monomer, glass transition temperature (Tg), crystallization temperature (Tc), and melting temperature (Tm).

Specifically, the first polyhydroxyalkanoate (PHA) resin may comprise the 4-HB monomer in an amount of, for example, 15% by mole to 60% by mole, 15% by mole to 55% by mole, 20% by mole to 55% by mole, 25% by mole to 55% by mole, 30% by mole to 55% by mole, 35% by mole to 55% by mole, 20% by mole to 50% by mole, 25% by mole to 50% by mole, 30% by mole to 50% by mole, 35% by mole to 50% by mole, or 20% by mole to 40% by mole, based on the total moles of monomers contained in the first polyhydroxyalkanoate (PHA) resin.

The first polyhydroxyalkanoate (PHA) resin may have a glass transition temperature (Tg) of, for example, -45°C to -10°C, -35°C to -10°C, -35°C to -15°C, -35°C to -20°C, or -30°C to -20°C.

The crystallization temperature (Tc) of the first polyhydroxyalkanoate (PHA) resin, for example, may not be measured or may be, for example, 60°C to 120°C, 60°C to 110°C, 70°C to 120°C, or 75°C to 115°C.

The melting temperature (Tm) of the first polyhydroxyalkanoate (PHA) resin, for example, may not be measured or may be, for example, 100°C to 170°C, 100°C to 160°C, 110°C to 160°C, or 120°C to 150°C.

The first polyhydroxyalkanoate (PHA) resin may have a weight average molecular weight (Mw) of, for example, 10,000 g/mole to 1,200,000 g/mole, 10,000 g/mole to 1,000,000 g/mole, 50,000 g/mole to 1,000,000 g/mole, 50,000 g/mole to 1,200,000 g/mole, 200,000 g/mole to 1,200,000 g/mole, 300,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 400,000 g/mole.

The first polyhydroxyalkanoate (PHA) may have a melt index (MI) of 0.1 g/10 minutes or more, 0.2 g/10 minutes or more, 0.5 g/10 minutes or more, 1 g/10 minutes or more, 1.5 g/10 minutes or more, or 2 g/10 minutes or more, and 5 g/10 minutes or less, 4.5 g/10 minutes or less, or 4 g/10 minutes or less, when measured at a temperature of 165°C under a load of 2.16 kg according to ASTM D1238.

For example, the melt index (MI) of the first polyhydroxyalkanoate (PHA) resin measured at a temperature of 165°C under a load of 2.16 kg according to ASTM D1238 may be 0.1 g/10 minutes to 5 g/10 minutes, 0.1 g/10 minutes to 4 g/10 minutes, 0.1 g/10 minutes to 3 g/10 minutes, 0.1 g/10 minutes to 2 g/10 minutes, 0.5 g/10 minutes to 5 g/10 minutes, 0.5 g/10 minutes to 4 g/10 minutes, 0.5 g/10 minutes to 3 g/10 minutes, 0.5 g/10 minutes to 2 g/10 minutes, 1 g/10 minutes to 5 g/10 minutes, 1 g/10 minutes to 4 g/10 minutes, or 1 g/10 minutes to 3 g/10.

Meanwhile, the second polyhydroxyalkanoate (PHA) resin may comprise the 4-HB monomer in an amount of 0.1% by mole to 30% by mole based on the total moles of monomers contained in the second polyhydroxyalkanoate (PHA) resin. For example, the second polyhydroxyalkanoate (PHA) resin may comprise the 4-HB monomer in an amount of 0.1% by mole to 30% by mole, 0.5% by mole to 30% by mole, 1% by mole to 30% by mole, 3% by mole to 30% by mole, 1% by mole to 28% by mole, 1% by mole to 25% by mole, 1% by mole to 24% by mole, 1% by mole to 20% by mole, 1% by mole to 15% by mole, 2% by mole to 25% by mole, 3% by mole to 25% by mole, 3% by mole to 24% by mole, 5% by mole to 24% by mole, 5% by mole to 20% by mole, greater than 5% by mole to less than 20% by mole, 7% by mole to 20% by mole, 10% by mole to 20% by mole, 15% by mole to 25% by mole, or 15% by mole to 24% by mole.

The first polyhydroxyalkanoate (PHA) resin and the second polyhydroxyalkanoate (PHA) resin may be distinguished from each other in terms of the content of a 4-HB monomer.

The second polyhydroxyalkanoate (PHA) resin may have a glass transition temperature (Tg) of, for example, -30°C to 80°C, -30°C to 10°C, -25°C to 5°C, -25°C to 0°C, -20°C to 0°C, or -15°C to 0°C.

The glass transition temperature (Tg) of the first polyhydroxyalkanoate (PHA) resin and the glass transition temperature (Tg) of the second polyhydroxyalkanoate (PHA) resin may be different from each other.

The second polyhydroxyalkanoate (PHA) resin may have a crystallization temperature (Tc) of, for example, 70°C to 120°C, 75°C to 115°C, or 80°C to 110°C, or may not be measured.

The second polyhydroxyalkanoate (PHA) resin may have a melting temperature (Tm) of, for example, 100°C to 170°C, 105°C to 165°C, 110°C to 160°C, 100°C to 150°C, 115°C to 155°C, 120°C to 160°C, or 120°C to 150°C.

The second polyhydroxyalkanoate (PHA) resin may have a weight average molecular weight (Mw) of 10,000 g/mole to 1,200,000 g/mole, 50,000 g/mole to 1,100,000 g/mole, 100,000 g/mole to 1,000,000 g/mole, 300,000 g/mole to 1,000,000 g/mole, 100,000 g/mole to 900,000 g/mole, 200,000 g/mole to 800,000 g/mole, 200,000 g/mole to 600,000 g/mole, 200,000 g/mole to 400,000 g/mole, or 400,000 g/mole to 700,000 g/mole.

Specifically, the first polyhydroxyalkanoate (PHA) resin has a glass transition temperature (Tg) of -35°C to -15°C, the second polyhydroxyalkanoate (PHA) resin satisfies at least one characteristic selected from a glass transition temperature (Tg) of - 15°C to 0°C, a crystallization temperature (Tc) of 80°C to 110°C, and a melting temperature (Tm) of 120°C to 160°C, and the glass transition temperature (Tg) of the first polyhydroxyalkanoate (PHA) resin and the glass transition temperature (Tg) of the second polyhydroxyalkanoate (PHA) resin may be different from each other. In addition, the crystallization temperature (Tc) and melting temperature (Tm) of the first polyhydroxyalkanoate (PHA) resin may not be measured.

The second polyhydroxyalkanoate (PHA) may have a melt index (MI) of 0.1 g/10 minutes or more, 0.2 g/10 minutes or more, 0.5 g/10 minutes or more, 1 g/10 minutes or more, 1.5 g/10 minutes or more, or 2 g/10 minutes or more, and 5 g/10 minutes or less, 4.5 g/10 minutes or less, or 4 g/10 minutes or less, when measured at a temperature of 165°C under a load of 2.16 kg according to ASTM D1238.

For example, the melt index (MI) of the second polyhydroxyalkanoate (PHA) resin measured at a temperature of 165°C under a load of 2.16 kg according to ASTM D1238 may be 0.1 g/10 minutes to 5 g/10 minutes, 0.1 g/10 minutes to 4 g/10 minutes, 0.1 g/10 minutes to 3 g/10 minutes, 0.1 g/10 minutes to 2 g/10 minutes, 0.5 g/10 minutes to 5 g/10 minutes, 0.5 g/10 minutes to 4 g/10 minutes, 0.5 g/10 minutes to 3 g/10 minutes, 0.5 g/10 minutes to 2 g/10 minutes, 1 g/10 minutes to 5 g/10 minutes, 1 g/10 minutes to 4 g/10 minutes, or 1 g/10 minutes to 3 g/10.

The melt index (MI) of the first polyhydroxyalkanoate (PHA) resin and the melt index (MI) of the second polyhydroxyalkanoate (PHA) resin may be different from each other.

When the first polyhydroxyalkanoate (PHA) resin and the second polyhydroxyalkanoate (PHA) resin each satisfy at least one of the content of a 4-HB monomer, glass transition temperature (Tg), crystallization temperature (Tc), melting temperature (Tm), and melt index (MI) in the above ranges, it may be more advantageous for achieving the effect desired in the present disclosure.

In addition, the first polyhydroxyalkanoate (PHA) resin and the second polyhydroxyalkanoate (PHA) resin may each be a polyhydroxyalkanoate (PHA) whose crystallinity has been controlled.

For example, the first polyhydroxyalkanoate (PHA) resin may comprise an amorphous polyhydroxyalkanoate (PHA) resin (hereinafter, referred to as aPHA resin), and the second polyhydroxyalkanoate (PHA) resin may comprise a semi-crystalline polyhydroxyalkanoate (PHA) resin (hereinafter, referred to as scPHA resin).

Specifically, the first polyhydroxyalkanoate (PHA) resin may be an aPHA resin or a mixed resin of an aPHA resin and an scPHA resin.

Specifically, the second polyhydroxyalkanoate (PHA) resin may be an scPHA resin or a mixed resin of an aPHA resin and an scPHA resin.

The aPHA resin and the scPHA resin may be distinguished from each other in terms of the content of a 4-HB monomer, glass transition temperature (Tg), crystallization temperature (Tc), melting temperature (Tm), melt index (MI), or the like.

The aPHA resin may comprise a 4-HB monomer in an amount of, for example, 25% by mole to 50% by mole based on the total moles of monomers contained in the polyhydroxyalkanoate (PHA) resin.

The aPHA resin may have a glass transition temperature (Tg) of, for example, -35°C to -20°C.

The crystallization temperature (Tc) of the aPHA resin may not be measured.

The melting temperature (Tm) of the aPHA resin may not be measured.

The scPHA resin may comprise a 4-HB monomer in an amount of, for example, 1% by mole to less than 25% by mole based on the total moles of monomers contained in the polyhydroxyalkanoate (PHA) resin.

The scPHA resin may have a glass transition temperature (Tg) of -20°C to 0°C.

The scPHA resin may have a crystallization temperature (Tc) of 75°C to 115°C.

The scPHA resin may have a melting temperature (Tm) of 110°C to 160°C.

According to an embodiment, when the polyhydroxyalkanoate (PHA) comprises a mixed resin of the first polyhydroxyalkanoate (PHA) resin and the second polyhydroxyalkanoate (PHA) resin, the weight ratio of the first polyhydroxyalkanoate (PHA) resin to the second polyhydroxyalkanoate (PHA) resin may be, for example, 1:0.5 to 3, 1:0.5 to 2.5, or 1:0.5 to 2.

According to an embodiment, the composition for a biodegradable film may comprise the polyhydroxyalkanoate (PHA) resin in an amount of 10 parts by weight or more, 15 parts by weight or more, 20 parts by weight or more, 25 parts by weight or more, or 30 parts by weight or more, and 100 parts by weight or less, less than 100 parts by weight, 95 parts by weight or less, 90 parts by weight or less, 85 parts by weight or less, or 80 parts by weight or less, based on 100 parts by weight of the entire resins contained in the composition for a biodegradable film.

For example, the composition for a biodegradable film may comprise the polyhydroxyalkanoate (PHA) resin in an amount of 10 parts by weight to 100 parts by weight, 10 parts by weight to 90 parts by weight, 10 parts by weight to 80 parts by weight, 10 parts by weight to 70 parts by weight, 10 parts by weight to 60 parts by weight, 20 parts by weight to 90 parts by weight, 20 parts by weight to 80 parts by weight, 20 parts by weight to 70 parts by weight, 20 parts by weight to 60 parts by weight, 20 parts by weight to 50 parts by weight, 30 parts by weight to 90 parts by weight, 30 parts by weight to 80 parts by weight, 30 parts by weight to 70 parts by weight, 30 parts by weight to 60 parts by weight, 30 parts by weight to 50 parts by weight, or 30 parts by weight to 40 parts by weight, based on 100 parts by weight of the entire resins contained in the composition for a biodegradable film.

When the content of the polyhydroxyalkanoate (PHA) resin satisfies the above range, mechanical properties such as tensile strength and elongation, processability during molding, and productivity can be enhanced at the same time.

### Biodegradable resin

The composition for a biodegradable film according to an embodiment may further comprise at least one selected from the group consisting of aliphatic polyester-based biodegradable resins and aliphatic/aromatic copolyester-based biodegradable resins as a component that provides biodegradability while securing mechanical properties suitable for the use of a biodegradable film or a biodegradable product prepared using the same.

Specifically, the type of the biodegradable resin is not particularly limited as long as it is commonly used. For example, the composition for a biodegradable film may comprise at least one biodegradable resin selected from the group consisting of polybutylene adipate terephthalate (PBAT), polylactic acid (PLA), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and thermoplastic starch (TPS). Specifically, the biodegradable resin may comprise at least one selected from the group consisting of polybutylene adipate terephthalate (PBAT), polylactic acid (PLA), and thermoplastic starch (TPS). More specifically, the biodegradable resin may comprise at least one selected from the group consisting of polybutylene adipate terephthalate (PBAT) and polylactic acid (PLA).

According to an embodiment, the composition for a biodegradable film may further comprise a polylactic acid (PLA) resin.

Since a polylactic acid (PLA) resin, unlike a petroleum-based resin, is based on biomass, it can be used as a recyclable resource and is environmentally friendly as it is biodegraded by moisture and microorganisms when landfilled.

Meanwhile, the polylactic acid (PLA) may have a weight average molecular weight (Mw) of 10,000 to 1,000,000 g/mole, for example, 30,000 to 500,000 g/mole, 100,000 to 300,000 g/mole, or 100,000 to 200,000 g/mole. The weight average molecular weight (Mw) may be measured by gel permeation chromatography (GPC).

The polylactic acid (PLA) may comprise L-lactic acid, D-lactic acid, D,L-lactic acid, or a combination thereof.

Specifically, the polylactic acid (PLA) may be a random copolymer of L-lactic acid and D-lactic acid.

The polylactic acid (PLA) may have a melting temperature (Tm) of 100°C to 300°C, 120°C to 250°C, or 120°C to 200°C.

The polylactic acid (PLA) may have a glass transition temperature (Tg) of 30°C to 100°C, 30°C to 80°C, 40°C to 80°C, or 45°C to 70°C.

Specifically, the composition for a biodegradable film may comprise the polylactic acid (PLA) resin in an amount of greater than 0 parts by weight, 5 parts by weight or more, 10 parts by weight or more, 15 parts by weight or more, 20 parts by weight or more, 30 parts by weight or more, 40 parts by weight or more, 45 parts by weight or more, 50 parts by weight or more, 55 parts by weight or more, or 60 parts by weight or more, based on 100 parts by weight of the entire resins contained in the composition for a biodegradable film. In addition, the composition for a biodegradable film may comprise the polylactic acid (PLA) resin in an amount of 90 parts by weight or less, 85 parts by weight or less, 80 parts by weight or less, 75 parts by weight or less, or 70 parts by weight or less, based on 100 parts by weight of the entire resins contained in the composition for a biodegradable film.

For example, the composition for a biodegradable film may comprise the polylactic acid (PLA) resin in an amount of 5 parts by weight to 90 parts by weight, 10 parts by weight to 90 parts by weight, 20 parts by weight to 90 parts by weight, 30 parts by weight to 90 parts by weight, 40 parts by weight to 90 parts by weight, 50 parts by weight to 90 parts by weight, 60 parts by weight to 90 parts by weight, 10 parts by weight to 80 parts by weight, 20 parts by weight to 80 parts by weight, 30 parts by weight to 80 parts by weight, 40 parts by weight to 80 parts by weight, 50 parts by weight to 80 parts by weight, 60 parts by weight to 80 parts by weight, 10 parts by weight to 70 parts by weight, 20 parts by weight to 70 parts by weight, 30 parts by weight to 70 parts by weight, 40 parts by weight to 70 parts by weight, 50 parts by weight to 70 parts by weight, or 60 parts by weight to 70 parts by weight, based on 100 parts by weight of the entire resins contained in the composition for a biodegradable film.

According to an embodiment, the composition for a biodegradable film further comprises a polylactic acid (PLA) resin, wherein the weight ratio of the polyhydroxyalkanoate (PHA) resin to the polylactic acid (PLA) resin may be 10:90 to 50:50, 20:80 to 50:50, 30:70 to 50:50, or 30:70 to 40:60.

When the composition for a biodegradable film comprises a polyhydroxyalkanoate (PHA) resin and a polylactic acid (PLA) resin, and when the weight ratio of the polyhydroxyalkanoate (PHA) resin and the polylactic acid (PLA) resin satisfies the above range, the compatibility between the resins is excellent, and it can be more advantageous for achieving the desired effect.

In addition, the composition for a biodegradable film may comprise the biodegradable resin in an amount of greater than 0 parts by weight, 5 parts by weight or more, 10 parts by weight or more, 15 parts by weight or more, 20 parts by weight or more, 30 parts by weight or more, 40 parts by weight or more, 45 parts by weight or more, 50 parts by weight or more, 55 parts by weight or more, or 60 parts by weight or more, and 90 parts by weight or less, 85 parts by weight or less, 80 parts by weight or less, 75 parts by weight or less, or 70 parts by weight or less, based on 100 parts by weight of the entire resins contained in the composition for a biodegradable film.

If the composition for a biodegradable film comprises the biodegradable resin in the above range, mechanical properties suitable for use as a biodegradable molded article can be achieved; thus, there is an advantage in that it can be used in various ways. For example, as the composition for a biodegradable film further comprises the biodegradable resin, for example, a polylactic acid (PLA) resin, it is possible to enhance tensile strength and elongation at the same time.

### Plasticizer

The composition for a biodegradable film comprises a plasticizer with a melting temperature of 95°C to 250°C. Specifically, the composition for a biodegradable film may comprise a plasticizer derived from nature and having a melting temperature of 95°C to 250°C.

When the plasticizer has a melting temperature in the above range, the plasticizer can be transformed into a liquid phase with high flowability during film molding, thereby enhancing the melt flow of the composition for a biodegradable film. In particular, when a plasticizer derived from nature is adopted, it may be more advantageous in terms of safety when used in food packaging materials or sanitary products.

The melting temperature of the plasticizer may be 100°C to 250°C, 120°C to 250°C, 130°C to 250°C, 130°C to 220°C, 130°C to 210°C, 130°C to 200°C, 140°C to 180°C, 140°C to 170°C, 140°C to lower than 170°C, 140°C to 165°C, or 140°C to 160°C. When the melting temperature of the plasticizer satisfies the above range, it has excellent melt flowability, which may be very advantageous in terms of processability and productivity.

The plasticizer may comprise an adipic acid-based plasticizer. Specifically, the plasticizer may be adipic acid.

In particular, adipic acid is one of the additives derived from nature, is harmless to the human body, and may also be used as an edible additive. Thus, when the composition for a biodegradable film comprising adipic acid is used in food packaging materials or sanitary products, it has the great advantage of having few side effects on the human body.

The adipic acid-based plasticizer, such as adipic acid, is a substance having a high melting temperature of about 152.1°C, is convenient to handle in a solid phase at room temperature, and is transformed into a liquid phase with high flowability at a molding temperature of about 170°C or higher; thus, adipic acid can act as a plasticizer capable of enhancing the melt flow of the composition for a biodegradable film.

In particular, the polyhydroxyalkanoate (PHA) resin contained in the composition for a biodegradable film has a high molecular weight or an ultra-high molecular weight in the range described above, unlike conventional polyester polymer resins. In general, the higher the molecular weight, the lower the melt flow. Thus, when the composition for a biodegradable film comprises a plasticizer with a melting temperature in the above specific range, such as the adipic acid-based plasticizer, the flowability of the entire resins contained in the composition for a biodegradable film can be improved at the molding temperature, and the overall melt index of the composition for a biodegradable film can be enhanced.

The melt index of the composition for a biodegradable film or the flowability of the resins contained in the composition may be one of the most important factors in terms of processability and productivity when a biodegradable film is prepared from the composition for a biodegradable film.

Specifically, when the composition for a biodegradable film comprises the plasticizer with a melting temperature in the above specific range, the load applied when extrusion molding equipment (extruder) is used during the molding of a biodegradable film or a biodegradable product can be significantly reduced, and the quality of a final product can be further enhanced.

For example, as the composition for a biodegradable film comprises the plasticizer with a melting temperature in the above specific range, the load applied to the extrusion equipment during extrusion molding, specifically, the load (torque) applied to the screw in the extruder, can be reduced, thereby further enhancing processability and productivity, and further enhancing the quality of a final product.

The content of the plasticizer may be 0.01 phr or more, 0.05 phr or more, 0.07 phr or more, or 0.1 phr or more, and 10 phr or less, 8 phr or less, 7 phr or less, 5 phr or less, 4 phr or less, 3 phr or less, 2 phr or less, 1 phr or less, less than 1 phr, 0.9 phr or less, 0.8 phr or less, 0.7 phr or less, 0.6 phr or less, or 0.5 phr or less.

For example, the content of the plasticizer may be 0.01 phr to 10 phr, 0.01 phr to 9 phr, 0.01 phr to 8 phr, 0.01 phr to 7 phr, 0.01 phr to 6 phr, 0.01 phr to 5 phr, 0.01 phr to 4 phr, 0.01 phr to 3 phr, 0.01 phr to 2 phr, 0.01 phr to 1 phr, 0.01 phr to less than 1 phr, 0.01 phr to 0.99 phr, 0.01 phr to 0.95 phr, 0.01 phr to 0.9 phr, 0.01 phr to 0.8 phr, 0.01 phr to 0.7 phr, 0.01 phr to 0.6 phr, 0.01 phr to 0.5 phr, 0.1 phr to 10 phr, 0.1 phr to 9 phr, 0.1 phr to 8 phr, 0.1 phr to 7 phr, 0.1 phr to 6 phr, 0.1 phr to 5 phr, 0.1 phr to 4 phr, 0.1 phr to 3 phr, 0.1 phr to 2 phr, 0.1 phr to 1 phr, 0.1 phr to 0.99 phr, 0.1 phr to 0.95 phr, 0.1 phr to 0.9 phr, 0.1 phr to 0.8 phr, 0.1 phr to 0.7 phr, 0.1 phr to 0.6 phr, or 0.1 phr to 0.5 phr.

Phr (per hundred resin) refers to a unit of input amount of a material added per 100 parts by weight of the entire polymer resins (1 phr: 1 g of input amount when the polymer resin is 100 g).

When the content of the plasticizer satisfies the above range, the flowability of the entire resins contained in the composition for a biodegradable film can be improved, and the melt index of the composition for a biodegradable film can be adjusted to a range suitable for molding; thus, the load applied when molding equipment, particularly an extruder, is used can be significantly reduced, processability and productivity can be enhanced at the same time, and the quality of a final product can be further enhanced.

Meanwhile, the composition for a biodegradable film may comprise an additional plasticizer other than the plasticizer with a melting temperature in the above specific range.

The additional plasticizer may comprise at least one commonly used plasticizer such as glycerin, sorbitol, 1,4-butanediol, ethylene glycol, maltose, sucrose, cyclodextrin, glucose, propylene glycol, urea, polyethylene glycol, and polypropylene glycol, but it is not limited thereto.

When the composition for a biodegradable film is used as a mixture of the plasticizer with a melting temperature in the specific range and the additional plasticizer, the weight ratio of the plasticizer with a melting temperature in the specific range to the additional plasticizer may be 1:9 to 9.9:0.1, 2:8 to 8:2, 3:7 to 7:3, or 5:5 to 9.9:0.1, but it is not limited to this range as long as the desired effects are not impaired.

### Additive

The composition for a biodegradable film may further comprise at least one additive selected from the group consisting of chain extenders, antioxidants, compatibilizers, weight agents, nucleating agents, melt strength enhancers, and slip agents.

The content of the additive may be 0.1 phr to 50 phr based on 100 parts by weight of the entire resins contained in the composition for a biodegradable film. For example, the content of the additive may be 0.1 phr or more, 0.5 phr or more, 1 phr or more, 1.5 phr or more, or 2 phr or more, and 30 phr or less, 28 phr or less, 25 phr or less, 20 phr or less, 15 phr or less, 10 phr or less, 8 phr or less, or 5 phr or less.

The chain extender can adjust the composition for a biodegradable film to have a desired viscosity that satisfies commercial properties so as to be applied to various molding processes such as blow molding, injection molding, and extrusion molding that require high viscosity or ultra-high viscosity conditions. It also has the great advantage of simultaneously enhancing processability and productivity.

The chain extender may comprise at least one selected from the group consisting of epoxy-based compounds, acrylic-based compounds, and isocyanate-based compounds. As a specific example, the chain extender may comprise an epoxy-based compound.

The epoxy-based compound may contain an epoxy group as a functional group. The chain extender may contain 1 to 30, 1 to 20, 1 to 15, 2 to 10, 3 to 10, 5 to 10, 2 to 9, or 5 to 9 epoxy groups.

For example, the epoxy-based compound may comprise a compound having a molecular weight of 100 g/mole to 50,000 g/mole, 100 g/mole to 35,000 g/mole, 100 g/mole to 30,000 g/mole, 100 g/mole to 25,000 g/mole, 100 g/mole to 20,000 g/mole, 200 g/mole to 10,000 g/mole, 300 g/mole to 10,000 g/mole, 300 g/mole to 8,000 g/mole, 300 g/mole to 400 g/mole, 5,000 g/mole to 8,000 g/mole, 6,000 g/mole to 8,000 g/mole, or 7,000 g/mole to 8,000 g/mole.

The epoxy-based compound may comprise a styrene acrylate copolymer having 5 to 9 epoxy groups, a bisphenol A-diglycidyl ether polymer having 2 epoxy groups, or a combination thereof. More specifically, the epoxy-based compound may comprise a styrene acrylate copolymer containing 5 or 9 epoxy groups. For example, the epoxy-based compound may comprise Joncryl ADR 4468 from BASF.

The chain extender may comprise an acrylic-based compound. The acrylic-based compound may contain an acrylic group, and the acrylic group may be bonded to the main chain as a side chain.

The chain extender may comprise an isocyanate-based compound. The isocyanate-based compound may be at least one selected from the group consisting of monofunctional isocyanates or multifunctional isocyanates. For example, the chain extender may be at least one selected from the group consisting of tolylene 2,4-diisocyanate, tolylene 2,6-diisocyanate, diphenylmethane 4,4'-diisocyanate, 2,4'-diisocyanate, naphthalene 1,5-diisocyanate, xylylene diisocyanate, hexamethylene diisocyanate, pentamethylene diisocyanate, and isophorone diisocyanate. In addition, the chain extender may comprise at least one selected from the group consisting of triisocyanate, tri(4-isocyanatophenyl)methane, and methylenebis(4-isocyanatocyclohexane).

The chain extender may be employed in an amount of 0.01 phr to 10 phr, 0.1 phr to 10 phr, 1 phr to 10 phr, 1 phr to 8 phr, 1 phr to 7 phr, 1 phr to 6 phr, 2 phr to 7 phr, 3 phr to 7 phr, 1 phr to 5 phr, 1 phr to 3 phr, 1 phr to 2 phr, 0.01 phr to 3 phr, 0.05 phr to 3 phr, 0.05 phr to 2.5 phr, 0.05 phr to 1.5 phr, 0.05 phr to 1 phr, 0.1 to 1 phr, or 0.1 to 0.5 phr.

The antioxidant is an additive for preventing decomposition by ozone or oxygen, preventing oxidation during storage, and preventing deterioration of the physical properties of a biodegradable film or a biodegradable product formed from the composition for a biodegradable film.

Any commonly used antioxidant may be used as the antioxidant as long as the desired effects are not impaired.

Specifically, the antioxidant may comprise at least one selected from the group consisting of hindered phenol-based antioxidants and phosphite-based (phosphorus-based) antioxidants.

The hindered phenol-based antioxidant may comprise, for example, at least one selected from the group consisting of 4,4'-methylene-bis(2,6-di-t-butylphenol), octadecyl-3-(3,5-di-t-butyl-4-hydroxyphenyl)propionate, pentaerythritol tetrakis[3-(3,5-di-t-butyl-4-hydroxyphenyl)propionate), and 3,9-bis[2-[3-(3-tert-butyl-4-hydroxy-5-methylphenyl)propionyloxy]-1,1-dimethylethyl]-2,4,8,10-tetraoxaspiro[5.5]undecane.

The phosphite-based (phosphorus-based) antioxidant may comprise, for example, at least one selected from the group consisting of tris-(2,4-di-t-butylphenyl)phosphite, bis-(2,4-di-t-butylphenyl)pentaerythritol-diphosphite, bis-(2,6-di-t-butyl-4-methylphenyl)pentaerythritol-diphosphite, distearyl-pentaerythritol-diphosphite, [bis(2,4-di-t-butyl-5-methylphenoxy)phosphino]biphenyl, and N,N-bis[2-[[2,4,8,10-tetrakis(1,1-dimethylethyl)dibenzo[d,f][1,3,2]dioxyphosphepin-6-yl]oxy]-ethyl]ethanamine.

The antioxidant may be employed in an amount of 0.01 phr to 10 phr, 0.1 phr to 10 phr, 1 phr to 10 phr, 1 phr to 8 phr, 1 phr to 7 phr, 1 phr to 6 phr, 2 phr to 7 phr, 3 phr to 7 phr, 1 phr to 5 phr, 1 phr to 3 phr, 1 phr to 2 phr, 0.01 phr to 3 phr, 0.05 phr to 3 phr, 0.05 phr to 2.5 phr, 0.05 phr to 1.5 phr, 0.05 phr to 1 phr, 0.1 to 1 phr, or 0.1 to 0.5 phr.

When the content of the antioxidant satisfies the above range, the physical properties of a biodegradable film or a biodegradable product formed from the composition for a biodegradable film can be enhanced, and it may be more advantageous for achieving the desired effects.

The compatibilizer is an additive for imparting compatibility by removing the heterogeneity of the copolymeric polyhydroxyalkanoate (PHA) resin.

Any commonly used compatibilizer may be used as the compatibilizer as long as the effects are not impaired.

Specifically, the compatibilizer may comprise at least one selected from the group consisting of polyvinyl acetates (PVAc), isocyanates, polypropylene carbonates, glycidyl methacrylates, ethylene vinyl alcohols, polyvinyl alcohols (PVA), ethylene vinyl acetates, and maleic anhydrides. The compatibilizer resin may comprise at least one selected from the group consisting of ethylene vinyl alcohol, polyvinyl alcohol (PVA), and ethylene vinyl acetate. For example, the compatibilizer may comprise Vinnex 2526 from Wacker.

The compatibilizer may be employed in an amount of 0.01 phr to 10 phr, 0.1 phr to 10 phr, 0.1 phr to 8 phr, 0.1 phr to 7 phr, 0.1 phr to 6 phr, 0.1 phr to 5 phr, 0.1 phr to 3 phr, 0.1 phr to 2 phr, 0.5 phr to 10 phr, 0.5 phr to 8 phr, 0.5 phr to 7 phr, 0.5 phr to 6 phr, 0.5 phr to 5 phr, 0.5 phr to 3 phr, 0.5 phr to 2 phr, 0.5 phr to 1.5 phr, 0.1 to 0.5 phr, or 0.5 to 1 phr.

When the content of the compatibilizer satisfies the above range, the compatibility between the resins and additives used is increased, which can enhance the physical properties of a biodegradable film or a biodegradable product formed from the composition for a biodegradable film, and it may be more advantageous for achieving the desired effects.

The weight agent is an inorganic material and an additive for increasing moldability by increasing the crystallization rate during the molding process and for reducing the problem of cost increase due to the use of the biodegradable resin.

Any commonly used inorganic materials may be used as the weight agent as long as the desired effects are not impaired.

Specifically, the weight agent may comprise at least one selected from the group consisting of calcium carbonate, such as light or heavy calcium carbonate, silica, talc, kaolin, barium sulfate, clay, calcium oxide, magnesium hydroxide, titanium oxide, carbon black, and glass fibers.

The weight agent may have an average particle size of 0.5 µm to 10 µm. If the average particle size of the weight agent is less than the above range, it may be difficult for the particles to be dispersed. If it exceeds the above range, the size of the particles becomes excessively large, which may impair the effects.

The weight agent may be employed in an amount of 0.01 phr to 20 phr, 0.1 phr to 20 phr, 1 phr to 20 phr, 1 phr to 15 phr, 1 phr to 12 phr, 1 phr to 10 phr, 2 phr to 20 phr, 2 phr to 15 phr, 2 phr to 12 phr, 2 phr to 10 phr, 3 phr to 20 phr, 3 phr to 15 phr, 3 phr to 12 phr, 3 phr to 10 phr, 5 phr to 20 phr, 5 phr to 15 phr, 5 phr to 12 phr, or 5 phr to 10 phr.

When the content of the weight agent satisfies the above range, it may be more advantageous for achieving the desired effects.

The nucleating agent is an additive for supplementing or changing the crystallization morphology of a polymer and for enhancing the solidification rate when a melt of the polymer is cooled. In particular, the polyhydroxyalkanoate (PHA) resin used according to an embodiment has a low solidification rate, which may not be suitable for processability as a soft material. When the nucleating agent is used, the solidification rate can be increased to further enhance processability, moldability, and productivity, and it is possible to effectively achieve the desired physical properties.

Common nucleating agents may be used as long as the effects are not impaired.

Specifically, the nucleating agent may be an elemental substance (pure substance), a metal compound comprising a complex oxide, such as carbon black, calcium carbonate, synthetic silicic acid and salts, silica, zinc white, clay, kaolin, basic magnesium carbonate, mica, talc, quartz powder, diatomite, dolomite powder, titanium oxide, zinc oxide, antimony oxide, barium sulfate, calcium sulfate, alumina, calcium silicate, metal salts of organic phosphorus, and boron nitride; a low molecular weight organic compound having a metal carboxylate group, such as a metal salt of octylic acid, toluic acid, heptanoic acid, pelargonic acid, lauric acid, myristic acid, palmitic acid, stearic acid, behenic acid, cerotic acid, montanic acid, melissic acid, benzene acid, p-tert-butylbenzene acid, terephthalic acid, terephthalic acid monomethyl ester, isophthalic acid, and isophthalic acid monomethyl ester; a polymeric organic compound having a metal carboxylate group, such as a salt of a carboxyl group-containing polyethylene obtained by oxidation of polyethylene, a carboxyl group-containing polypropylene obtained by oxidation of polypropylene, a copolymer of an acrylic acid or methacrylic acid and an olefin (e.g., ethylene, propylene, and butene-1), a copolymer of an acrylic or methacrylic acid and styrene, a copolymer of an olefin and maleic anhydride, and a copolymer of styrene and maleic anhydride; a polymeric organic compound, such as an alpha-olefin having 5 or more carbon atoms branched to a carbon atom in position 3 (e.g., 3,3-dimethylbutene-1,3-methylbutene-1,3-methylpentene-1,3-methylhexene-1 and 3,5,5-trimethylhexene-1), a polymer of vinylcycloalkanes (e.g., vinylcyclopentane, vinylcyclohexane, and vinylnorbornane), polyalkylene glycols (e.g., polyethylene glycol and polypropylene glycol), poly(glycolic acid), cellulose, a cellulose ester, and a cellulose ether; phosphoric acid or phosphorous acid and a metal salt thereof, such as diphenyl phosphate, diphenyl phosphite, a metal salt of bis(4-tert-butylphenyl)phosphate, and methylene bis-(2,4-tert-butylphenyl) phosphate; a sorbitol derivative, such as bis(p-methylbenzylidene) sorbitol and bis(p-ethylbenzylidene) sorbitol; and thioglycolic anhydride, p-toluenesulfonic acid, and a metal salt thereof. The nucleating agents may be used alone or in combination thereof.

The nucleating agent may be employed in an amount of 0.01 phr to 10 phr, 0.1 phr to 10 phr, 1 phr to 10 phr, 1 phr to 8 phr, 1 phr to 7 phr, 1 phr to 6 phr, 2 phr to 7 phr, 3 phr to 7 phr, 1 phr to 5 phr, 1 phr to 3 phr, 1 phr to 2 phr, 0.01 phr to 3 phr, 0.05 phr to 3 phr, 0.05 phr to 2.5 phr, 0.05 phr to 1.5 phr, 0.05 phr to 1 phr, 0.1 to 1 phr, or 0.1 to 0.5 phr.

When the content of the nucleating agent satisfies the above range, the solidification rate can be increased to enhance moldability, and it is possible to further enhance productivity and processability by enhancing the solidification rate during, for example, the cutting step for producing pellets or in the preparation process.

The melt strength enhancer is an additive for improving the melt strength of reactants.

Any commonly used melt strength enhancer may be used as the melt strength enhancer as long as the effects are not impaired.

Specifically, the melt strength enhancer may comprise at least one selected from the group consisting of polyesters, styrene-based polymers (such as acrylonitrile butadiene styrene and polystyrene), polysiloxanes, organomodified siloxane polymers, and maleic anhydride-grafted ethylene propylene diene monomer (MAH-g-EPDM).

The melt strength enhancer may be employed in an amount of 0.01 phr to 10 phr, 0.1 phr to 10 phr, 1 phr to 10 phr, 1 phr to 8 phr, 1 phr to 7 phr, 1 phr to 6 phr, 2 phr to 7 phr, 3 phr to 7 phr, 1 phr to 5 phr, 1 phr to 3 phr, 1 phr to 2 phr, 0.01 phr to 3 phr, 0.05 phr to 3 phr, 0.05 phr to 2.5 phr, 0.05 phr to 1.5 phr, 0.05 phr to 1 phr, 0.1 to 1 phr, or 0.1 to 0.5 phr.

When the content of the melt strength enhancer satisfies the above range, it may be more advantageous for achieving the desired effects.

The slip agent is an additive for enhancing the slip properties (slippery properties) during extrusion and for preventing the surfaces of a film or sheet from sticking to each other in the process.

Any commonly used slip agent may be used as the slip agent as long as the effects are not impaired. For example, the slip agent may be at least one selected from the group consisting of erucamide, oleamide, and stearamide.

The slip agent may be employed in an amount of 0.01 phr to 10 phr, 0.1 phr to 10 phr, 1 phr to 10 phr, 1 phr to 8 phr, 1 phr to 7 phr, 1 phr to 6 phr, 2 phr to 7 phr, 3 phr to 7 phr, 1 phr to 5 phr, 1 phr to 3 phr, 1 phr to 2 phr, 0.01 phr to 3 phr, 0.05 phr to 3 phr, 0.05 phr to 2.5 phr, 0.05 phr to 1.5 phr, 0.05 phr to 1 phr, 0.1 to 1 phr, or 0.1 to 0.5 phr.

When the content of the slip agent satisfies the above range, the processability, productivity, and moldability may be further enhanced, and it may be more advantageous for achieving the desired effects.

The composition for a biodegradable film may comprise a crosslinking agent and/or a stabilizer as additional additives.

The crosslinking agent is an additive for modifying the properties of the polyhydroxyalkanoate (PHA) resin and increasing the molecular weight of the resin. Common crosslinking agents may be used as long as the effects are not impaired.

For example, the crosslinking agent may be at least one selected from the group consisting of fatty acid esters, natural oil containing an epoxy group (epoxylated), diallyl phthalate, pentaerythritol tetraacrylate, trimethylolpropane triacrylate, pentaerythritol triacrylate, dipentaerythritol pentaacrylate, diethylene glycol dimethacrylate, and bis(2-methacryloxyethyl)phosphate.

The crosslinking agent may be employed in an amount of 0.01 phr to 10 phr, 0.1 phr to 10 phr, 1 phr to 10 phr, 1 phr to 8 phr, 1 phr to 7 phr, 1 phr to 6 phr, 2 phr to 7 phr, 3 phr to 7 phr, 1 phr to 5 phr, 1 phr to 3 phr, 1 phr to 2 phr, 0.01 phr to 3 phr, 0.05 phr to 3 phr, 0.05 phr to 2.5 phr, 0.05 phr to 1.5 phr, 0.05 phr to 1 phr, 0.1 to 1 phr, or 0.1 to 0.5 phr.

The stabilizer is an additive for protecting against oxidation and heat and for preventing a color change. Any commonly used stabilizer may be used as the stabilizer as long as the effects are not impaired.

Specifically, the stabilizer may be one selected from the group consisting of trimethyl phosphate, triphenyl phosphate, trimethyl phosphine, phosphoric acid, and phosphorous acid.

The stabilizer may be employed in an amount of 0.01 phr to 10 phr, 0.1 phr to 10 phr, 1 phr to 10 phr, 1 phr to 8 phr, 1 phr to 7 phr, 1 phr to 6 phr, 2 phr to 7 phr, 3 phr to 7 phr, 1 phr to 5 phr, 1 phr to 3 phr, 1 phr to 2 phr, 0.01 phr to 3 phr, 0.05 phr to 3 phr, 0.05 phr to 2.5 phr, 0.05 phr to 1.5 phr, 0.05 phr to 1 phr, 0.1 to 1 phr, or 0.1 to 0.5 phr.

Meanwhile, the composition for a biodegradable film may further comprise a carrier resin.

The carrier resin may be in the form of a masterbatch capable of carrying or transporting a functional additive.

For example, the carrier resin may comprise a polybutylene adipate terephthalate (PBAT)-based resin. Specifically, it may comprise a masterbatch comprising a polybutylene adipate terephthalate (PBAT)-based resin.

As the carrier resin carries or transports an additive used to impart functionality to a composition or film despite poor dispersibility, it can efficiently impart the desired function without side effects caused by the use of the functional additive with poor dispersibility, and it can maintain excellent biodegradability and mechanical properties.

The carrier resin, for example, a polybutylene adipate terephthalate (PBAT)-based resin, may have a weight average molecular weight (Mw) of about 100,000 to 500,000 g/mole, about 120,000 to 500,000 g/mole, about 150,000 to 450,000 g/mole, about 150,000 to 430,000 g/mole, or about 150,000 to 400,000 g/mole. The weight average molecular weight (Mw) may be measured by gel permeation chromatography (GPC).

The polybutylene adipate terephthalate (PBAT)-based resin is an aliphatic-aromatic polyester copolymer and may be obtained by polycondensation of 1,4-butanediol, adipic acid, and terephthalic acid or dimethyl terephthalate according to a commonly known method.

According to an embodiment, the content of the carrier resin may be 1 phr to 100 phr, 5 phr to 100 phr, 5 phr to 80 phr, 10 phr to 60 phr, 10 phr to 50 phr, 10 phr to 40 phr, 10 phr to 30 phr, 15 phr to 40 phr, 15 phr to 35 phr, 15 phr to 30 phr, 15 phr to 25 phr, 18 phr to 35 phr, 18 phr to 30 phr, 18 phr to 25 phr, 20 phr to 30 phr, 20 phr to 25 phr, or 10 phr to 20 phr. When the content of the carrier resin satisfies the above range, the desired function can be efficiently imparted without side effects.

### Physical properties of the composition for a biodegradable film

According to an embodiment, as the composition for a biodegradable film has a melt index that is very advantageous for achieving excellent processability and productivity, processability and productivity can be enhanced at the same time during film molding, and a biodegradable film and a biodegradable product with enhanced biodegradability, optical properties, and mechanical properties can be provided. In particular, the load applied to the molding equipment when the biodegradable film or final biodegradable product is prepared can be minimized, and the quality of the product can be further enhanced.

First, when the composition for a biodegradable film is fed to an extruder equipped with a screw at 6 rpm and extruded at 170°C at a screw rotation speed of 200 rpm, the load (torque) applied to the screw may be 70% or less at a pressure of 46 bar or less inside the extruder.

When the composition for a biodegradable film is extrusion molded, the load applied to the screw can be significantly reduced, thereby enhancing productivity, processability, and moldability.

Specifically, the load (torque) applied to the screw may be less than 70%, 65% or less, 60% or less, less than 60%, 59% or less, or 58% or less, at a pressure of 46 bar or less inside the extruder.

According to an embodiment, the load (torque) applied to the screw may be 60% or less, less than 60%, 59% or less, 58% or less, 55% or less, or 54% or less, at a pressure of 46 bar or less inside the extruder.

According to another embodiment, the load (torque) applied to the screw may be 40% to less than 70%, 40% to 65%, 45% to 60%, 48% to 60%, 50% to 60%, 52% to 60%, 53% to 60%, or 55% to 60%, at a pressure of 40 bar to 46 bar inside the extruder.

According to another embodiment, the load (torque) applied to the screw may be 40% to less than 70%, 40% to 65%, 45% to 65%, 50% to 65%, 50% to 63%, 52% to 63%, 53% to 62%, or 55% to 60%, at a pressure of greater than 35 bar to less than 40 bar inside the extruder.

In addition, the load (torque) applied to the screw may be 40% to 60%, 42% to 60%, 45% to 60%, 48% to 60%, 50% to 60%, 52% to less than 60%, 53% to 58%, or 53% to 55%, at a pressure of 30 bar to 35 bar inside the extruder.

In addition, the load (torque) applied to the screw may be 40% to 60%, 42% to 60%, 45% to 60%, 48% to 60%, 50% to less than 60%, 50% to 58%, or 50% to 55%, at a pressure of 25 bar to less than 30 bar inside the extruder.

In the extruder equipped with a screw, the ratio (L/D) of the length (L) to diameter (D) of the screw may be 20 to 50, and the diameter (D) of the screw may be 15 Ø to 30 Ø. For example, in the extruder equipped with a screw, the ratio (L/D) of the length (L) to diameter (D) of the screw may be 40, and the diameter (D) of the screw may be 19 Ø, but they are not limited thereto.

In addition, the values of load and pressure applied to the screw may vary depending on the type of extruder.

In addition, in an embodiment, the composition for a biodegradable film may have physical properties suitable for various molding processes, such as extrusion molding, injection molding, compression molding, air pressure molding, blowing or blow molding, and thermoforming.

For example, the composition for a biodegradable film may have physical properties suitable for extrusion molding. Accordingly, the composition for a biodegradable film may be a composition for a biodegradable extruded film used for extrusion molding.

### [Biodegradable film]

In an embodiment, there is provided a biodegradable film comprising the composition for a biodegradable film.

The biodegradable film can be biodegraded by any one of microorganisms, moisture, oxygen, light, and heat, and has excellent mechanical properties.

Specifically, the biodegradable film may have a tensile strength of 10 MPa to 50 MPa, 15 MPa to 45 MPa, 15 MPa to 40 MPa, 20 MPa to 40 MPa, 20 MPa to 35 MPa, or 20 MPa to 30 MPa.

For the measurement of tensile strength, the biodegradable film is cut to 10 cm in length and 1 cm in width and mounted to a universal testing machine (UTM) at a spacing between chucks of 20 mm in accordance with ASTM D882. Testing is performed at a tensile speed of 200 mm/minute at room temperature of 25°C, and the tensile strength is measured with a program installed in the device. When the tensile strength satisfies the above range, it is possible to enhance the mechanical properties, productivity, processability, and moldability of the biodegradable film at the same time, and it may be more advantageous for achieving the desired effects.

In addition, the biodegradable film may have an elongation of 200% or more, 250% or more, 270% or more, 280% or more, 290% or more, or 295% or more, and 900% or less, 800% or less, 700% or less, 600% or less, 500% or less, 480% or less, or 450% or less.

For example, the elongation of the biodegradable film may be 200% to 900%, 200% to 800%, 250% to 600%, 250% to 500%, 250% to 480%, 250% to 450%, 280% to 450%, or 290% to 450%.

According to an embodiment, the biodegradable film has a tensile strength of 10 MPa to 50 MPa and an elongation of 200% or more.

For the measurement of elongation, the biodegradable film is cut to a size of 10 cm in length and 1 cm in width and mounted to a universal testing machine (UTM) at a spacing between chucks of 20 mm in accordance with ASTM D882. The maximum deformation just before fracture is measured at a tensile speed of 200 mm/minute. The ratio of the maximum deformation to the initial length is calculated as the elongation. Meanwhile, the biodegradable film may have excellent optical properties. Specifically, the biodegradable film may have a haze of 95% or less, 90% or less, 80% or less, 70% or less, 60% or less, 50% or less, 40% or less, 30% or less, 20% or less, 10% or less, 9% or less, 8% or less, 7% or less, 6% or less, or 5% or less. If the haze exceeds the above range, the transparency of the biodegradable film is significantly reduced, which may limit its use for packaging purposes, for example, where the contents inside are visible.

The biodegradable film is characterized by excellent mechanical properties and biodegradability of 90% or more in soil and the ocean.

The biodegradability refers to the rate of decomposition relative to the standard material (e.g., cellulose) in the same period. The Ministry of Environment of Korea defines a biodegradable material whose biodegradability is 90% or higher relative to the standard material. Specifically, the marine biodegradability measured according to the EL 724 standard is 90% or more.

The biodegradable film may comprise a biodegradable extruded film prepared by extrusion molding the composition for a biodegradable film.

### [Process for preparing a biodegradable film]

In an embodiment, there is provided a process for preparing a biodegradable film using the composition for a biodegradable film.

Specifically, the process for preparing a biodegradable film may comprise a first step of preparing a composition for a biodegradable film; and a second step of feeding the composition into an extruder and extrusion molding it.

Hereinafter, the process for preparing a biodegradable film will be described in detail.

First, the process for preparing a biodegradable film comprises a first step of preparing a composition for a biodegradable film.

Specifically, the first step may comprise mixing a polyhydroxyalkanoate (PHA) resin and a plasticizer with a melting temperature of 95°C to 250°C.

The polyhydroxyalkanoate (PHA) resin and the plasticizer are as described above.

The composition for a biodegradable film may use the polyhydroxyalkanoate (PHA) resin alone as a main resin, or it may comprise a mixed resin in which the polyhydroxyalkanoate (PHA) resin and the biodegradable resin described above are mixed.

For example, the composition for a biodegradable film may comprise the polyhydroxyalkanoate (PHA) resin and the polylactic acid (PLA) resin.

In addition, the composition for a biodegradable film may be prepared by adding the plasticizer with a melting temperature in the above specific range to the mixed resin.

In addition, the composition for a biodegradable film may be prepared by adding the plasticizer with a melting temperature in the above specific range and the additives described above to the mixed resin. In such an event, the additives may be selected and used in various ways depending on the intended use and desired effects, but they are not limited thereto.

For example, the composition for a biodegradable film may be prepared by mixing the mixed resin of the polyhydroxyalkanoate (PHA) resin and the polylactic acid (PLA) resin as a main resin, a plasticizer, a chain extender, a compatibilizer, and a weight agent as additives.

The types and contents of the respective components contained in the main resin and additives are as described above.

In addition, the composition for a biodegradable film may further comprise a carrier resin capable of carrying or transporting the above additives and/or functional additives.

That is, the first step may comprise adding a carrier resin to a polyhydroxyalkanoate (PHA) resin and a plasticizer with a melting temperature of 95°C to 250°C. The carrier resin may comprise a polybutylene adipate terephthalate (PBAT)-based resin. Specifically, it may comprise a polybutylene adipate terephthalate (PBAT)-based masterbatch. The type and content of the carrier resin are as described above.

Meanwhile, the process for preparing a biodegradable film comprises a second step of feeding the composition for a biodegradable film into an extruder and extrusion molding it.

The composition for a biodegradable film according to an embodiment may be extrusion molded into a shape suitable for the intended use. For example, the composition for a biodegradable film may be provided in the form of pellets and then extrusion molded to prepare a biodegradable film, or the composition for a biodegradable film may be directly extrusion molded to prepare a biodegradable film.

The molding may be carried out using extrusion molding.

A single-screw extruder or a twin-screw extruder may be used as the extruder.

The extruder may be a T-die twin-screw extruder equipped with a screw.

Fig. 1 is a partial cross-sectional view of an extruder used according to an embodiment. Referring to Fig. 1, the extruder (100) may comprise a raw material feeder (110), a compression section (120), a screw (130), a head section (header) (140), and a die (150).

The extrusion molding conditions may vary depending on the use of the biodegradable film, and the extrusion may be carried out by a commonly used process.

The composition for a biodegradable film may be fed to the raw material feeder (110) of the extruder (100) at a speed of, for example, 2 rpm to 50 rpm, 2 rpm to 40 rpm, 2 rpm to 30 rpm, or 2 rpm to 20 rpm.

The rotation speed of the screw (130) of the extruder (100) may be, for example, 100 rpm to 300 rpm, 120 rpm to 280 rpm, 150 rpm to 250 rpm, or 180 rpm to 230 rpm.

The extrusion temperature may be 100°C to 210°C, 120°C to 200°C, 120°C to 180°C, 120°C to 175°C, 130°C to 175°C, or, for example, 140°C to 175°C.

For example, the extrusion temperature may be 100°C to 210°C, 120°C to 200°C, 120°C to 180°C, 120°C to 175°C, 150°C to 180°C, 150°C to 175°C, 160°C to 180°C, or 160°C to 170°C, based on the temperature measured at the die (150) of the extruder (100).

The extrusion temperature may be 100°C to 210°C, 120°C to 200°C, 120°C to 180°C, 120°C to 175°C, 150°C to 200°C, 150°C to 180°C, or 155°C to 175°C, based on the temperature measured at the head section (header) (140) of the extruder (100).

When the extrusion molding conditions satisfy the above ranges, it may be more advantageous for achieving the desired effect.

In addition, the values of load and pressure applied to the screw may vary depending on the type of extruder.

In addition, according to an embodiment, a step of preheating (preheating step) the composition for a biodegradable film before being fed to the die of the extruder may be further carried out.

The preheating step may be carried out at, for example, 110°C to 170°C. Specifically, the preheating step may be carried out by gradually raising the temperature by giving a temperature gradient, for example, starting at 110°C to 130°C to 150°C to 170°C.

According to an embodiment, the extrusion pressure may be 46 bar or less, 45 bar or less, 44 bar or less, 43 bar or less, 42 bar or less, 40 bar or less, or less than 40 bar, for example, 20 bar to 46 bar, 25 bar to 46 bar, 20 bar to 45 bar, 25 bar to 45 bar, 28 bar to 46 bar, 28 bar to 45 bar, 40 bar to 46 bar, greater than 35 bar to less than 40 bar, 30 bar to 35 bar. Here, the extrusion pressure may be, for example, the pressure of the head section (header) (140) inside the extruder (100).

When the extrusion pressure satisfies the above range, the load (torque) applied to the molding equipment, especially the screw, during extrusion molding, can be minimized, processability and productivity can be enhanced at the same time, and the quality of a final product can be further enhanced.

In addition, the process for preparing a biodegradable film may further comprise, after the molding, thermal treatment (heat setting) and/or drying. Process conditions used in the present art can be used as the process conditions of these steps as long as the desired effects are not impaired.

In addition, according to an embodiment, there is provided a biodegradable product comprising the biodegradable film or the composition for a biodegradable film.

The biodegradable product may comprise at least one selected from the group consisting of primary and secondary packaging materials for food, electronic products, or sanitary products, straws, trays, eating containers, and adhesive products.

### Embodiments for Carrying Out the Invention

Hereinafter, the present disclosure will be described in more detail with reference to the following examples. But the following Examples are intended to illustrate the present disclosure, and the scope of the Examples is not limited thereto only.

### <Example>

### Example 1

As shown in Table 1 below, a mixed resin of a polyhydroxyalkanoate (PHA) resin (3-HB-co-4-HB, aPHA, 4-HB content: 34% by mole) (CJ Corporation) and a polylactic acid (PLA) resin (Natureworks, 4032D) at a weight ratio of 40:60, a polybutylene adipate terephthalate (PBAT) (Ankor bioplastics) as a carrier resin, and Vinnex 2526 (compatibilizer, Wacker), Joncryl ADR 4468 (chain extender, BASF), adipic acid (plasticizer, BASF), and calcium carbonate (CaCO₃) (weight agent, Junsei Chemical) as additives were mixed to prepare a composition for a biodegradable film.

The composition for a biodegradable film was fed to a T-die twin-screw extruder (BA-19, Bautek), and T-die extrusion molding was carried out under the process conditions of the temperature and speed as shown in Table 2 below to prepare a biodegradable film.

### Examples 2 to 4

A composition for a biodegradable film and a biodegradable film were prepared in the same manner as in Example 1, except that the content of adipic acid was changed as shown in Table 1 below.

### Examples 5 to 7

A composition for a biodegradable film and a biodegradable film were prepared in the same manner as in Example 1, except that the mixing weight ratio of polyhydroxyalkanoate (PHA) and polylactic acid (PLA) resins and the content of adipic acid were changed as shown in Table 1 below.

### <Evaluation Example>

### Evaluation Example 1: Tensile strength

The biodegradable film prepared from each composition for a biodegradable film was cut to a specimen of 10 cm in length and 1 cm in width and mounted to a universal testing machine (4206-001, manufacturer: UTM) at a spacing between chucks of 20 mm in accordance with ASTM D882. Testing was performed at a tensile speed of 200 mm/minute at room temperature of 25°C, and the tensile strength was measured with a program installed in the device.

### Evaluation Example 2: Elongation

The biodegradable film prepared from each composition for a biodegradable film was cut to a specimen of 10 cm in length and 1 cm in width and mounted to a universal testing machine (4206-001, manufacturer: UTM) at a spacing between chucks of 20 mm in accordance with ASTM D882. Testing was performed at a tensile speed of 200 mm/minute to measure the maximum deformation just before fracture. The ratio of the maximum deformation to the initial length was calculated as the elongation.

### Evaluation Example 3: Processability

The processability of each composition for a biodegradable film was determined by the degree of pressure (bar) of the extruder header and the load (torque, %) applied to the motor when the extruder was used. The extent of the load applied to the motor was evaluated using a measuring device built in the equipment.

The specific composition, mechanical properties, and melt index of each composition for a biodegradable film obtained in the Examples are summarized in Table 1 below, and the process conditions during extrusion molding and the results of processability evaluation are summarized in Table 2 below.

**[Table 1]**

| Composition | | | Example | | | | | | |
|---|---|---|---|---|---|---|---|---|---|
| | | | 1 | 2 | 3 | 4 | 5 | 6 | 7 |
| Resin (part by weight) | PLA | | 60 | 60 | 60 | 60 | 70 | 70 | 70 |
| | PHA (aPHA) | | 40 | 40 | 40 | 40 | 30 | 30 | 30 |
| Additive (*phr) | PBAT | | 20 | 20 | 20 | 20 | 20 | 20 | 20 |
| | Compatibilizer | | 1 | 1 | 1 | 1 | 1 | 1 | 1 |
| | Chain extender | | 0.3 | 0.3 | 0.3 | 0.3 | 0.3 | 0.3 | 0.3 |
| | Weight agent | | 10 | 10 | 10 | 10 | 5 | 5 | 5 |
| | Plasticizer | Adipic acid | 0.1 | 0.3 | 0.5 | 1.0 | 0.1 | 0.3 | 1.0 |
| Mechanical property | Tensile strength (Mpa) | | 26.7 | 27.1 | 27.3 | 20.1 | 29.5 | 28.0 | 29.9 |
| | Elongation (%) | | 440.7 | 422.0 | 370.2 | 339.5 | 345.6 | 295.4 | 341.2 |

| | | | | | | | | | |
|---|---|---|---|---|---|---|---|---|---|
| * Phr (per hundred resin) refers to a unit of input amount of a material added per 100 parts by weight of a polymer resin (1 phr: 1 g of input amount of additive when the polymer resin is 100 g). | | | | | | | | | |

**[Table 2]**

| Process conditions | | Example | | | | | | | | | | | | | |
|---|---|---|---|---|---|---|---|---|---|---|---|---|---|---|---|
| | | 1 | | 2 | | 3 | | 4 | | 5 | | 6 | | 7 | |
| Temp. (°C) | Measurement | SV¹⁾ | PV²⁾ | SV | PV | SV | PV | SV | PV | SV | PV | SV | PV | SV | PV |
| | Die | 166 | 166 | 166 | 166 | 166 | 166 | 166 | 166 | 166 | 166 | 166 | 166 | 166 | 166 |
| | | 164 | 164 | 164 | 164 | 164 | 164 | 164 | 164 | 164 | 164 | 164 | 164 | 164 | 164 |
| | Header | 169 | 170 | 169 | 169 | 169 | 169 | 169 | 169 | 169 | 169 | 169 | 169 | 169 | 169 |
| Speed (rpm) | Screw rotation speed | 200 | | 200 | | 200 | | 200 | | 200 | | 200 | | 200 | |
| | Composition feeding | 6 | | 6 | | 6 | | 6 | | 6 | | 8 | | 8 | |
| Processability | Pressure (bar) | 40 | | 38 | | 34 | | 28 | | 46 | | 44 | | 30 | |
| | Load (torque) (%) | 60 | | 58 | | 55 | | 53 | | 60 | | 55 | | 53 | |
| ¹⁾ SV: set value, ²⁾ PV: measured value | | | | | | | | | | | | | | | |

As can be seen from Table 2 above, in the compositions for a biodegradable film prepared in Examples 1 to 7, the load (torque) applied to the screw was at a low level of about 53% to about 60% at a pressure of 46 bar or less inside the extruder, and the biodegradable film prepared from each composition for a biodegradable film had a tensile strength of about 20 MPa or more and an elongation of about 295.4% or more, indicating excellent processability and mechanical properties.

Specifically, in the compositions for a biodegradable film prepared in Examples 1 to 3 in which the weight ratio of polylactic acid (PLA) and polyhydroxyalkanoate (PHA) was 60:40, as the content of the plasticizer increased from 0.1 phr to 0.5 phr, the pressure in the extruder decreased from about 40 bar to about 34 bar, and the load (torque) applied to the screw decreased from 60% to 55%. The biodegradable film prepared from each composition for a biodegradable film showed excellent mechanical properties with a tensile strength of about 26.7 MPa to about 27.3 MPa and an elongation of about 370.2% to about 440.7%.

In addition, in the compositions for a biodegradable film prepared in Examples 5 and 6 in which the weight ratio of PLA and polyhydroxyalkanoate (PHA) was 70:30, as the content of the plasticizer increased from 0.1 phr to 0.3 phr, the pressure in the extruder decreased from about 46 bar to about 44 bar, and the load (torque) applied to the screw decreased from about 60% to about 55%. The biodegradable film prepared from each composition for a biodegradable film showed excellent mechanical properties with a tensile strength of about 28.0 MPa to about 29.5 MPa and an elongation of about 295.4% to about 345.6%.

Further, the compositions for a biodegradable film prepared in Examples 1 to 7 comprise a biodegradable resin and an environmentally friendly adipic acid as an additive; thus, they have excellent biodegradability and are highly desirable from the viewpoint of environmental friendliness, whereby they can be applied to various fields.

## Claims

1. A composition for a biodegradable film, which comprises a polyhydroxyalkanoate (PHA) resin and a plasticizer with a melting temperature of 95°C to 250°C,
wherein when the composition for a biodegradable film is fed to an extruder equipped with a screw at 6 rpm and extruded at 170°C at a screw rotation speed of 200 rpm, the load (torque) applied to the screw is 70% or less at a pressure of 46 bar or less inside the extruder.

2. The composition for a biodegradable film of claim 1, wherein the content of the plasticizer is 0.01 phr to 10 phr.

3. The composition for a biodegradable film of claim 1, wherein the plasticizer is adipic acid.

4. The composition for a biodegradable film of claim 1, wherein the polyhydroxyalkanoate (PHA) resin satisfies at least one of the following characteristics:
a glass transition temperature (Tg) of -45°C to 80°C,
a crystallization temperature (Tc) of 60°C to 120°C, and
a melting temperature (Tm) of 100°C to 170°C.

5. The composition for a biodegradable film of claim 1, wherein the polyhydroxyalkanoate (PHA) resin comprises at least one monomer selected from the group consisting of 4-hydroxybutyrate (4-HB), 3-hydroxybutyrate (3-HB), 3-hydroxypropionate (3-HP), 3-hydroxyvalerate (3-HV), 3-hydroxyhexanoate (3-HH), 4-hydroxyvalerate (4-HV), 5-hydroxyvalerate (5-HV), and 6-hydroxyhexanoate (6-HH).

6. The composition for a biodegradable film of claim 5, wherein the polyhydroxyalkanoate (PHA) resin comprises a polyhydroxyalkanoate (PHA) copolymer (PHA copolymer) comprising a 4-hydroxybutyrate (4-HB) monomer, and the 4-hydroxybutyrate (4-HB) monomer is employed in an amount of 1% by mole to 99% by mole based on the total moles of monomers contained in the polyhydroxyalkanoate (PHA) copolymer.

7. The composition for a biodegradable film of claim 6, wherein the polyhydroxyalkanoate (PHA) resin comprises a resin comprising a 3-hydroxybutyrate (3-HB) monomer and a 4-hydroxybutyrate (4-HB) monomer, and the 4-hydroxybutyrate (4-HB) monomer is employed in an amount of 1% by mole to 60% by mole based on the total moles of the 3-hydroxybutyrate (3-HB) monomer and the 4-hydroxybutyrate (4-HB) monomer.

8. The composition for a biodegradable film of claim 1, which further comprises at least one biodegradable resin selected from the group consisting of polybutylene adipate terephthalate (PBAT), polylactic acid (PLA), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and thermoplastic starch (TPS).

9. The composition for a biodegradable film of claim 8, which further comprises a polylactic acid (PLA) resin, wherein the weight ratio of the polyhydroxyalkanoate (PHA) resin and the polylactic acid (PLA) resin is 10:90 to 50:50.

10. The composition for a biodegradable film of claim 1, which further comprises at least one additive selected from the group consisting of chain extenders, antioxidants, compatibilizers, weight agents, nucleating agents, melt strength enhancers, and slip agents, wherein the content of the additive is 0.1 phr to 50 phr.

11. A biodegradable film, which comprises the composition for a biodegradable film of claim 1.

12. The biodegradable film of claim 11, which has a tensile strength of 10 MPa to 50 MPa and an elongation of 200% or more.

13. A process for preparing a biodegradable film, which comprises:
a first step of preparing the composition for a biodegradable film of claim 1; and
a second step of feeding the composition for a biodegradable film to an extruder to conduct extrusion molding thereof.

14. The process for preparing a biodegradable film of claim 13, wherein the first step comprises mixing a polyhydroxyalkanoate (PHA) resin and a plasticizer with a melting temperature of 95°C to 250°C.
